# FASCICULE DE BREVET EUROPEEN

(11) **EP 3 740 889 B1**
(45) Date de publication et mention de la délivrance du brevet: **22.06.2022**
(21) Numéro de dépôt: 19705983.5
(22) Date de dépôt: 16.01.2019
(51) Int. Cl.: G06F 21/36, H04L 9/32, G09C 5/00, G06K 9/00, G06F 21/87

(54) **DISPOSITIF ET PROCEDE DE COMPARAISON DE FICHIERS GEOMETRIQUES**
VORRICHTUNG UND VERFAHREN ZUM VERGLEICHEN VON GEOMETRISCHEN DATEIEN
DEVICE AND METHOD FOR COMPARING GEOMETRIC FILES

(30) Priorité: 17.01.2018 FR 1850383
(43) Date de publication de la demande: 25.11.2020
(73) Titulaire: Xyalis, 38000 Grenoble (FR)
(72) Inventeur: MOREY-CHAISEMARTIN, Philippe, 74400 Chamonix-Mont-Blanc (FR); BRAULT, Frederic, 38190 Sainte-Agnes (FR); BEISSER, Eric, 38410 Vaulnaveys-Le-Haut (FR); BENZAKOUR, Farid, 38360 Sassenage (FR)
(74) Mandataire: Cabinet Beaumont
(86) Numéro de dépôt international: PCT/FR2019/050090
(87) Numéro de publication internationale: WO 2019/141942

(56) Documents cités:
- US-B1- 7 801 325
- FERNANDES EMMANUEL ET AL: "Geometric sof hash functions for 2D and 3D objects", SECURITY, STEGANOGRAPHY AND WATERMARKING OF MULTIMEDIA CONTENTS VI, PROC. OF SPIE-IS&T ELECTRONIC IMAGING, vol. 5306, 2004, pages 784-795, XP040254604,

## Description

### Domaine de l'invention

La présente description concerne le domaine des systèmes de comparaison de documents, et en particulier un dispositif et un procédé de comparaison de fichiers de conception géométrique.

### Exposé de l'art antérieur

Des conceptions géométriques peuvent être créées et utilisées dans divers domaines, comprenant le bâtiment, la conception de produits et l'industrie micro-électronique. De telles conceptions peuvent être définies par des fichiers de conception géométrique, qui représentent des éléments des conceptions sous la forme de descriptions vectorielles, de polygones, de courbes de Béziers, etc. Par exemple, dans le domaine de la micro-électronique, les tracés des circuits sont souvent représentés par un fichier dans le format de fichier GDS II (de l'anglais Graphic Database System II - système de base de données graphique II) ou dans le format de fichier OASIS (de l'anglais Open Artwork System Interchange Standard - norme d'échange pour système de graphisme ouvert).

Dans certaines situations, il peut être souhaitable de comparer automatiquement deux conceptions géométriques afin de détecter les différences entre les conceptions. Par exemple, un fichier de conception géométrique définissant une conception géométrique peut être édité par plusieurs intervenants, et l'un des intervenants peut souhaiter vérifier si des changements substantiels ont été faits dans la conception. Toutefois, on rencontre une difficulté en ce qu'il n'est pas suffisant de réaliser simplement une comparaison de deux fichiers de conception géométrique définissant la conception. En effet, il existe divers types de modifications de fichier, comme une modification du type de fichier, de l'ordre dans lequel les éléments de la conception sont définis, de la manière avec laquelle les éléments de la conception sont définis, ainsi que des modifications de la date du fichier, qui ne constituent pas des changements substantiels, et qui ainsi ne devraient pas être identifiés comme tels. Toutefois, il y a une difficulté technique pour obtenir une solution pour détecter des différences substantielles entre deux conceptions géométriques de manière simple et rapide. FERNANDES EMMANUEL ET AL: "Géométrie sof hash functions for 2D and 3D objects",SECURITY, STEGANOGRAPHY AND WATERMARKING OF MULTIMEDIA CONTENTS VI, PROC. OF SPIE-IS&T ELECTRONIC IMAGING, vol. 5306, 2004, pages 784-795, décrit l'utilisation de la transformée de Radon et application d'une fonction de hachage classique pour obtenir la signature numérique d'un objet. Pour une conception géométrique 2D la projection est faite sur deux axes. US 7 801 325 décrit des procédés d'application d'un filigrane à une conception de topologie d'un circuit intégré en se basant sur un nombre de structures géométriques associées à la topologie du circuit intégré. La signature numérique associée à la conception de topologie du circuit intégré est générée en prenant une ou plusieurs régions dans la conception de topologie et en modifiant légèrement le nombre de structures géométriques dans la région considérée.

### Résumé

Un objet de modes de réalisation de la présente description est de résoudre au moins partiellement un ou plusieurs problèmes de l'art antérieur.

Selon un aspect, on prévoit un procédé de génération d'une signature numérique d'une conception géométrique représentée par un fichier de conception géométrique, le procédé comprenant la génération, par un dispositif de traitement de données, de la signature numérique sur la base d'une projection sur un seul axe de la conception géométrique, la génération de la signature numérique comprenant la réalisation, par le dispositif de traitement de données, de la projection sur un seul axe pour générer un vecteur comprenant des coordonnées d'un seul axe de points sélectionnés dans la conception géométrique.

Selon un mode de réalisation, la génération de la signature numérique comprend en outre l'application, par le dispositif de traitement de données, d'une fonction de hachage au vecteur afin de réduire sa longueur.

Selon un autre aspect, on prévoit un procédé de détection, par un dispositif de traitement de données, de différences entre une première conception géométrique définie par un premier fichier de conception géométrique et une deuxième conception géométrique définie par un deuxième fichier de conception géométrique, le procédé comprenant : générer, pour au moins le premier fichier de conception géométrique, une première signature numérique selon le procédé susmentionné ; et comparer la première signature numérique à une deuxième signature numérique associée au deuxième fichier de conception géométrique.

Selon un mode de réalisation, le procédé comprend en outre, avant l'étape de comparaison, la génération, pour le deuxième fichier de conception géométrique, de la deuxième signature numérique sur la base d'une projection sur un seul axe de la deuxième conception géométrique.

Selon un mode de réalisation, le procédé comprend en outre, avant l'étape de comparaison, l'extraction, par le dispositif de traitement de données, de la deuxième signature numérique à partir du deuxième fichier de conception géométrique.

Selon un mode de réalisation, la génération de la première signature numérique comprend : diviser, par le dispositif de traitement de données, la première conception géométrique en une pluralité de fenêtres ; générer une première sous-signature pour chacune des fenêtres, chaque première sous-signature étant générée sur la base d'une projection sur un seul axe de la portion de la conception géométrique contenue dans la fenêtre correspondante ; et combiner les premières sous-signatures des fenêtres pour générer la première signature numérique.

Selon un mode de réalisation, le procédé comprend en outre : générer, ou extraire à partir du premier fichier de conception géométrique, une première boîte de délimitation associée à la première conception géométrique ; comparer la première boîte de délimitation à une deuxième boîte de délimitation associée à la deuxième conception géométrique ; et détecter une différence entre les premier et deuxième fichiers de conception géométrique en détectant une différence entre les première et deuxième boîtes de délimitation.

Selon un mode de réalisation, la génération de la première signature numérique comprend : identifier, par le dispositif de traitement de données, une hiérarchie d'éléments de conception communs ayant chacun une ou plusieurs instanciations dans le premier fichier de conception géométrique ; générer une structure élémentaire pour chaque élément de conception commun identifié dans le premier fichier de conception géométrique ; et générer la première signature numérique sur la base de chacune des signatures élémentaires et d'une ou plusieurs caractéristiques de l'instanciation de chacun des éléments de conception communs dans le premier fichier de conception géométrique.

Selon un autre aspect, on prévoit un support de stockage électronique non transitoire mémorisant un programme informatique comprenant des instructions pour exécuter le procédé susmentionné, lorsqu'elles sont exécutées par le dispositif de traitement de données.

Selon un autre aspect, on prévoit un dispositif informatique comprenant : une mémoire mémorisant un premier fichier de conception géométrique définissant une première conception géométrique ; et un dispositif de traitement de données agencé pour générer une première signature numérique pour le premier fichier de conception en réalisant une projection sur un seul axe de la première conception géométrique, dans lequel la génération de la signature numérique comprend la réalisation, par le dispositif de traitement de données, de la projection sur un seul axe pour générer un vecteur comprenant des coordonnées d'un seul axe de points sélectionnés dans la conception géométrique, et mémoriser la première signature numérique dans une mémoire.

Selon un mode de réalisation, le dispositif de traitement de données est en outre agencé pour détecter des différences entre la première conception géométrique et une deuxième conception géométrique définie par un deuxième fichier de conception géométrique en comparant la première signature numérique à une deuxième signature numérique associée au deuxième fichier de conception géométrique, et pour afficher sur un dispositif d'affichage une indication de la différence détectée.

### Brève description des dessins

Les caractéristiques et avantages susmentionnés et d'autres apparaîtront clairement avec la description détaillée suivante de modes de réalisation, donnée à titre d'illustration et non de limitation, en faisant référence aux dessins joints dans lesquels :
la figure 1 illustre un exemple de conception géométrique représentée par un fichier de conception géométrique selon un exemple de réalisation ;
la figure 2 est un organigramme illustrant des étapes dans un procédé de génération d'une signature numérique d'une conception géométrique selon un exemple de la présente description ;
la figure 3 est un graphique représentant une opération de projection sur un seul axe du procédé de la figure 2 plus en détail selon un exemple de réalisation ;
la figure 4 illustre schématiquement un dispositif informatique pour générer une signature numérique d'une conception géométrique selon un exemple de réalisation de la présente description ;
la figure 5 est un organigramme représentant des étapes dans un procédé de génération d'une signature numérique pour une base de données géométrique selon un exemple de réalisation de la présente description ;
la figure 6 est un organigramme représentant des étapes dans un procédé de comparaison de fichiers de conception géométrique selon un mode de réalisation de la présente description ;
la figure 7 représente une conception géométrique ayant une structure hiérarchique selon un exemple de réalisation ;
la figure 8 est un graphique représentant une structure de conception hiérarchique selon un exemple de réalisation ; et
la figure 9 est un organigramme représentant des étapes dans un procédé de comparaison de fichiers de conception géométrique ayant des structures hiérarchiques selon un exemple de réalisation de la présente description.

### Description détaillée

Bien que dans la description qui suit on décrive des modes de réalisation en relation avec une conception géométrique correspondant à une couche d'un dispositif micro-électronique, il sera clair pour l'homme de l'art que les principes décrits ici pourraient être appliqués à une grande gamme de types de fichiers utilisés dans d'autres domaines comme le bâtiment, le développement de produits, etc.

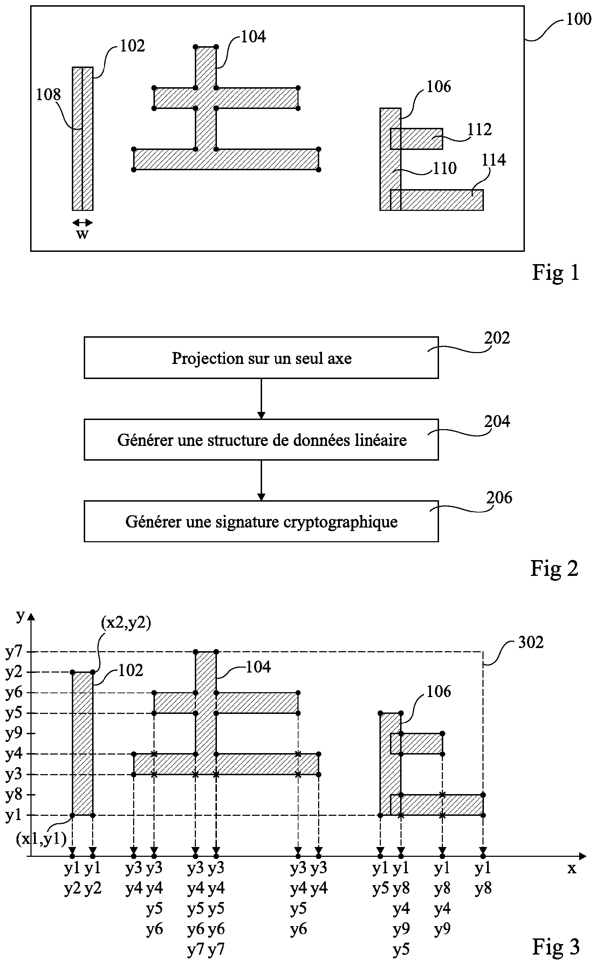

La figure 1 illustre un exemple de conception géométrique 100 représentée par un fichier de conception géométrique selon un exemple de réalisation. L'exemple de la figure 1 correspond à un tracé de circuit d'un dispositif micro-électronique, dans lequel des zones hachurées correspondent à des zones dans lesquelles un métal est présent. La conception est ainsi une conception à une seule couche.

La conception 100 comprend des éléments 102, 104 et 106. La description de ces éléments est par exemple mémorisée dans un fichier dans un format vectoriel, comme le format GDS II, le format OASIS ou un autre format de fichier.

Chacun des éléments 102, 104 et 106 correspond par exemple à un polygone qui peut être défini selon l'une quelconque d'un certain nombre de manières différentes. Par exemple, l'élément 102 est défini par une ligne 108 d'une longueur donnée et ayant une certaine épaisseur w. L'élément 104 est par exemple défini par une série de lignes interconnectées définissant son périmètre, les intersections entre les lignes correspondant à des coins. L'élément 106 est par exemple défini par trois formes rectangulaires 110, 112 et 114, qui peuvent se chevaucher, bien que dans une conception à une seule couche un tel chevauchement puisse être ignoré.

Comme cela a été mentionné précédemment dans la section d'art antérieur, il peut être souhaitable de comparer la conception 100 à une autre conception pour vérifier s'il y a des différences. Une solution pour comparer deux fichiers de conception pourrait consister à générer une somme de vérification ou similaire pour chaque fichier électronique, et à comparer ces sommes de vérification. Toutefois, une différence entre les sommes de vérification n'indiquerait pas qu'il y a nécessairement une différence substantielle entre les conceptions géométriques représentées par le fichier.

Une solution pour réaliser une comparaison substantielle entre les conceptions pourrait consister à comparer la position des éléments des deux conceptions, point pour point, élément par élément. Toutefois, une telle technique serait très consommatrice de temps pour des fichiers géométriques grands et complexes. En outre, elle nécessiterait que les deux fichiers à comparer soient présents. Ainsi, si un fichier est transmis à une tierce partie, et si l'émetteur d'origine souhaite pouvoir détecter si des changements substantiels ont été faits dans une future version du fichier, l'émetteur d'origine devrait conserver une copie du fichier d'origine, ce qui conduirait à l'utilisation de ressources de mémoire.

Comme on va le décrire plus en détail dans la suite, pour répondre à ces problèmes, les présents inventeurs ont développé un procédé de génération d'une signature numérique représentant des éléments substantiels d'un fichier de conception géométrique.

La figure 2 est un organigramme illustrant des étapes dans un procédé de génération d'une structure numérique d'un fichier de conception géométrique selon un exemple de réalisation.

Dans une étape 202, la conception géométrique définie par le fichier de conception géométrique est projetée sur un seul axe.

Dans une étape 204, une structure de données linéaire est générée sur la base de la projection sur un seul axe générée dans l'étape 202.

Dans une étape 206, une signature numérique est générée sur la base de la structure de données linéaire. Par exemple, la signature numérique est une signature cryptographique générée par une fonction de hachage ou similaire. Dans un exemple, on pourrait utiliser la fonction de hachage MD5 (de l'anglais Message Digest 5 - condensé de message 5), ou la fonction de hachage connue sous le nom de SHA-3 (de l'anglais Secure Hash Algorithm 3 - algorithme de hachage sécurisé 3). La signature numérique a par exemple une longueur comprise entre 10 et plusieurs centaines de multiplets.

La signature numérique générée dans l'étape 206 est par exemple mémorisée dans une mémoire, et dans certains modes de réalisation elle est ajoutée au fichier de conception géométrique.

La figure 3 est un graphique représentant un exemple de projection sur un seul axe, réalisée par l'étape 202 de la figure 2 appliquée au fichier de conception géométrique 100 de la figure 1. Dans l'exemple de la figure 3, la projection se fait sur l'axe x, mais bien sûr dans des variantes de réalisation la projection pourrait se faire sur l'axe y.

Initialement, une fenêtre rectangulaire 302 est par exemple définie avec des bords correspondant aux limites de la conception géométrique dans les directions x et y. Cette fenêtre 302 définit alors la région qui doit être projetée sur un seul axe.

Les sommets de chaque élément se trouvant dans la fenêtre 302 sont ensuite projetés sur l'axe x. Les sommets correspondent à des points de coins, formés par l'intersection de chaque bord droit de chaque élément de la conception. Par exemple, l'élément 102 est représenté par ses quatre points de coins, avec des coordonnées dans le sens horaire à partir du bas à gauche vers le bas à droite : (x1, y1), (x1, y2), (x2, y2) et (x2, y1). Après la projection sur un seul axe sur l'axe x, les coordonnées y sont par exemple positionnées le long de l'axe x dans un ordre basé sur la coordonnée x correspondante de chaque sommet. La projection pour l'élément 102 devient ainsi (y1, y2, y1, y2). Dans cet exemple, les coordonnées y associées à chaque coordonnée x sont ordonnées de la plus basse vers la plus haute. Bien sûr, dans des variantes de réalisation, il serait possible de fixer l'ordre des coordonnées y de manière opposée allant de la plus haute vers la plus basse.

Dans le cas de l'élément 104, il y a 16 sommets qui sont projetés sur l'axe x. En outre, certains de ces sommets ont une coordonnée x croisée par des bords de l'élément. Ces points sont marqués par des croix en figure 3, et dans certains modes de réalisation, en plus de la projection des sommets sur l'axe x, ces points sont aussi projetés.

Dans le cas de l'élément 106, on notera que les coins des rectangles qui chevauchent d'autres rectangles ne sont pas par exemple considérés comme des sommets de l'élément, et sont donc ignorés.

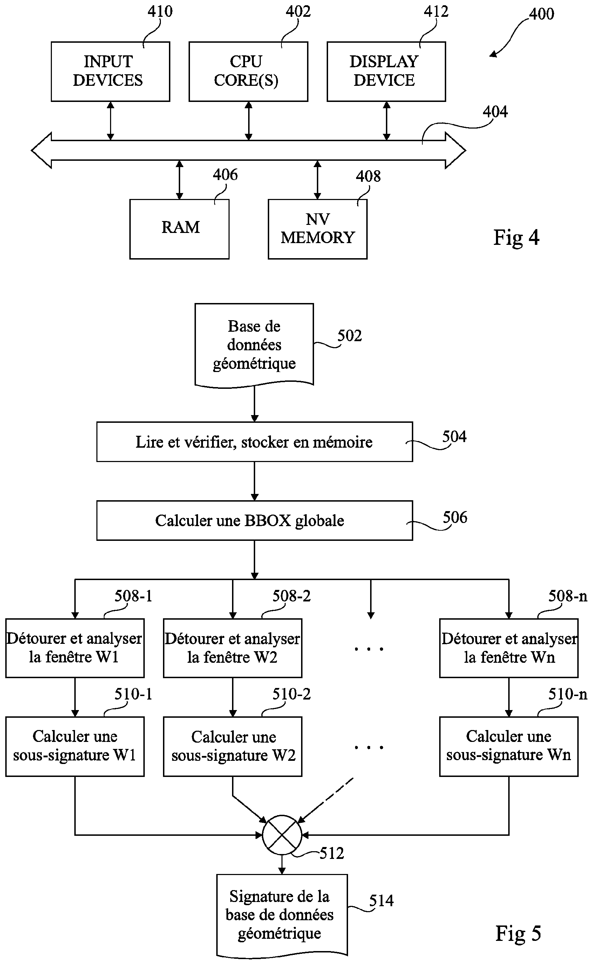

La figure 4 illustre schématiquement un dispositif informatique 400 approprié pour mettre en œuvre le procédé décrit précédemment en relation avec les figures 2 et 3. Le dispositif informatique 400 comprend par exemple un dispositif de traitement de données 402, comprenant par exemple un ou plusieurs cœurs (CPU CORE(S)) de CPU (unité centrale de traitement) sous le contrôle d'instructions informatiques. Par exemple, le dispositif de traitement de données 402 est couplé par l'intermédiaire d'un bus 404 à une mémoire RAM (mémoire à accès aléatoire) 406 et à une mémoire non volatile (NV MEMORY) 408, dont l'une ou l'autre ou les deux peuvent mémoriser des instructions pour contrôler le dispositif de traitement de données 402. La mémoire 406 et/ou la mémoire 408 mémorisent aussi par exemple un ou plusieurs fichiers de conception géométrique et une ou plusieurs signatures numériques associées à chaque fichier de conception géométrique. Le dispositif informatique 400 comprend aussi par exemple un ou plusieurs dispositifs d'entrée (INPUT DEVICES) 410 et un dispositif d'affichage (DISPLAY DEVICE) 412 couplés au bus 404.

Bien que dans l'exemple de la figure 3 la conception géométrique comprenne une seule fenêtre 302, dans des variantes de réalisation, la conception géométrique pourrait comprendre, ou pourrait être divisée en une pluralité de fenêtres qui peuvent être traitées en parallèle, comme on va maintenant le décrire plus en détail en faisant référence à la figure 5.

La figure 5 est un organigramme représentant des étapes dans un procédé de génération d'une signature numérique d'une base de données géométrique (GEOMETRIC DATABASE) 502. Le procédé est par exemple mis en œuvre par le dispositif informatique 400 de la figure 4.

Une base de données géométrique telle que définie ici correspond à une ou plusieurs conceptions géométriques qui peuvent être exprimées par une pluralité de fenêtres. Par exemple, une base de données géométrique peut comprendre plusieurs fichiers géométriques, chacun comportant une ou plusieurs fenêtres, ou un seul fichier géométrique comportant de multiples couches, chaque couche comportant une ou plusieurs fenêtres.

Dans une étape 504, la base de données géométrique 502 est par exemple lue, vérifiée pour s'assurer que les fichiers ne sont pas endommagés, et stockée dans une mémoire, comme dans la RAM 406, du dispositif informatique 400.

Dans une étape 506, une BBOX (de l'anglais Boundary Box - boîte de délimitation) globale est par exemple calculée pour la base de données géométrique. Comme cela est connu de l'homme de l'art, une BBOX est une boîte de délimitation ou boite englobante qui définit la taille de la conception en englobant tous les éléments de la conception. Dans certains modes de réalisation, la BBOX est définie comme étant une partie de chaque fichier géométrique de la base de données géométrique.

Un traitement en parallèle de n fenêtres W1 à Wn de la base de données géométrique 502 est ensuite par exemple réalisé au moins partiellement en parallèle, n étant par exemple égal à au moins 2. Par exemple, la base de données géométrique peut comprendre une conception bidimensionnelle, qui peut être divisée par le dispositif de traitement de données 402 en colonnes et rangées de fenêtres, chaque fenêtre couvrant par exemple une région égale de la conception. En variante, d'autres divisions de la conception en fenêtres seraient possibles. Dans certains cas, la conception peut déjà être divisée en feuilles, en vues, en couches ou en régions qui peuvent être traitées comme correspondant à une ou plusieurs fenêtres.

Le traitement en parallèle comprend par exemple des étapes parallèles 508-1 à 508-n et 510-1 à 510-n réalisées sur les n fenêtres W1 à Wn respectivement. Chacune des étapes 508-1 à 508-n implique par exemple un détourage et une analyse de la fenêtre correspondante W1 à Wn. Le détourage de la fenêtre implique par exemple de définir le rectangle 302 de la figure 3 sur la base des éléments présents dans la fenêtre. Une analyse de la fenêtre implique par exemple la sélection, automatiquement ou par un utilisateur, des géométries qui sont pertinentes pour le calcul de la signature. Par exemple, une base de données géométrique peut comprendre plusieurs couches ou plusieurs types de données. L'opération d'analyse implique par exemple la sélection des couches et/ou des types de données qui doivent être pris en compte pour le calcul de la signature. Les étapes 510-1 à 510-n impliquent par exemple la génération d'une sous-signature pour chaque fenêtre W1 à Wn respectivement, en utilisant le procédé décrit précédemment en référence à la figure 2.

Les sous-signatures générées pour chaque fenêtre W1 à Wn sont ensuite par exemple combinées dans une opération 512 afin de générer une signature de base de données géométrique (GEOMETRIC DATABASE SIGNATURE) 514. Par exemple, chacune des sous-signatures peut avoir une longueur fixe, et la combinaison des signatures peut simplement consister à concaténer les signatures afin de générer une signature de base de données qui est n fois plus longue que la longueur fixe de chaque sous-signature. On peut aussi utiliser des structures de données plus complexes pour représenter les sous-signatures, comme des arbres de hachage.

La signature numérique d'un fichier ou d'une base de données décrite précédemment est par exemple incorporée dans le fichier ou la base de données géométrique correspondante. Un utilisateur recevant ce fichier ou cette base de données peut extraire cette signature, et aussi recalculer une nouvelle signature pour le fichier ou la base de données. En comparant la signature recalculée avec la signature extraite, une vérification peut être réalisée pour savoir si des changements ont été faits dans le fichier.

En variante, afin de comparer deux fichiers ou bases de données géométriques, une signature est par exemple calculée pour chaque fichier ou base de données, et les signatures sont comparées afin de détecter des différences.

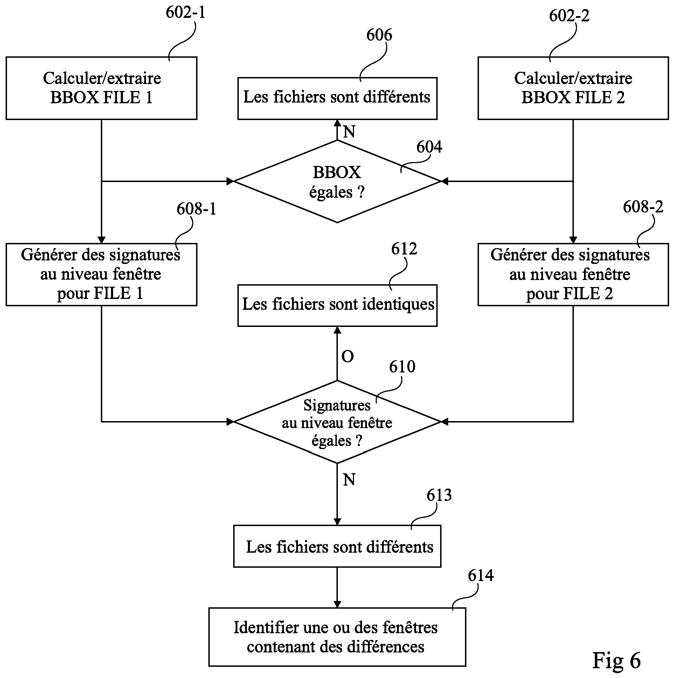

On va maintenant décrire un procédé de comparaison de signatures pour détecter des différences entre des fichiers géométriques, en faisant référence à la figure 6.

La figure 6 est un organigramme représentant des étapes dans un procédé de comparaison de fichiers géométriques FILE 1 et FILE 2 selon un exemple de réalisation de la présente description. Ce procédé est par exemple mis en œuvre par le dispositif informatique 400 de la figure 4. Le même processus peut être utilisé pour comparer des bases de données géométriques.

Dans des étapes parallèles 602-1 et 602-2, des BBOX des fichiers FILE 1 et FILE 2 sont respectivement calculées ou extraites. Par exemple, la BBOX peut être mémorisée dans le fichier et extraite, ou peut être calculée sur la base de la conception représentée dans le fichier.

Dans une étape 604, les BBOX des fichiers FILE 1 et FILE 2 sont comparées. Si elles ne sont pas égales, cela fournit par exemple une indication rapide que les fichiers sont différents, comme cela est représenté par une étape 606. Un utilisateur peut être informé de la différence par un message approprié affiché sur le dispositif d'affichage 412. Sinon un traitement en parallèle des fichiers continue.

Dans des étapes parallèles 608-1 et 608-2, des signatures au niveau fenêtre pour les fichiers FILE 1 et FILE 2 sont par exemple générées, et les signatures des fenêtres correspondantes dans chaque fichier sont comparées une par une dans une étape 610. Si toutes les signatures sont trouvées égales, les fichiers sont par exemple supposés être identiques dans une étape 612, et l'utilisateur peut être informé de ce résultat par l'intermédiaire du dispositif d'affichage 412. Autrement, si une ou plusieurs des signatures sont trouvées différentes, dans une étape 613, l'utilisateur est par exemple informé de ce résultat par l'intermédiaire du dispositif d'affichage 412. Dans certains cas, directement une paire de signature est trouvée comme étant différente, le traitement s'arrête et la fenêtre trouvée différente dans chaque fichier est par exemple indiquée à l'utilisateur dans une étape 614. En variante, toutes les signatures sont générées et comparées, et l'utilisateur est informé de toutes les fenêtres trouvées différentes dans chaque fichier dans l'étape 614.

L'exemple de la figure 6 implique la génération des signatures au niveau fenêtre pour chaque fichier dans les étapes 608-1 et 608-2 respectivement. Toutefois, les signatures au niveau fenêtre pour l'un ou l'autre des fichiers ou les deux pourraient avoir déjà été calculées précédemment. Par exemple, les signatures au niveau fenêtre du fichier FILE 2 peuvent être contenues dans le fichier FILE 1. En effet, le fichier FILE 2 correspond par exemple à une version antérieure de FILE 1, sur la base de laquelle ces signatures au niveau fenêtre ont été générées.

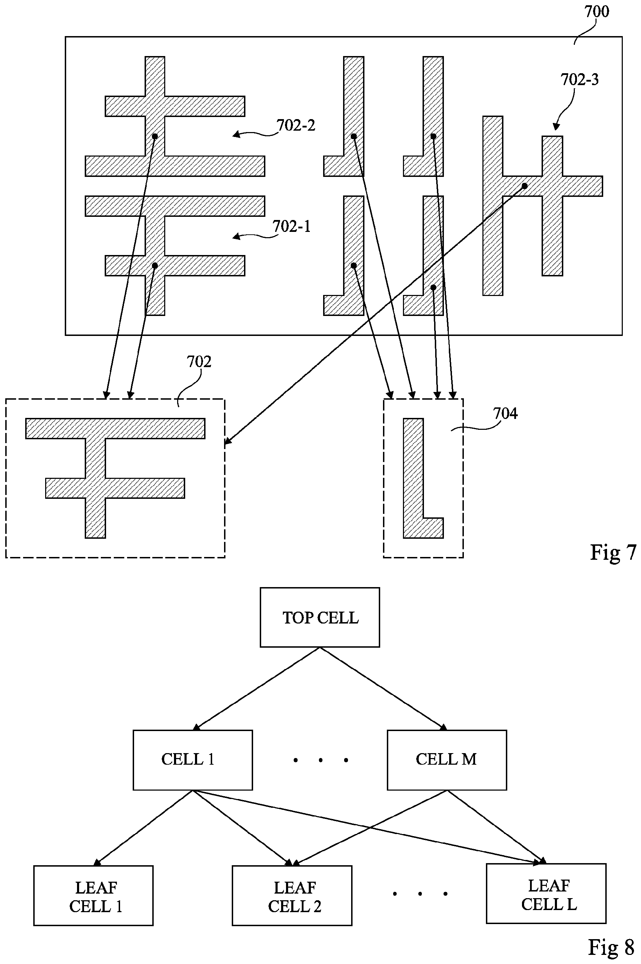

Dans certains modes de réalisation, un fichier ou une base de données de conception géométrique peut avoir une structure hiérarchique qui peut être exploitée pendant le processus de génération de signature, comme on va le décrire maintenant en faisant référence aux figures 7, 8 et 9.

La figure 7 représente un exemple de conception géométrique 700 ayant une structure hiérarchique. Une structure hiérarchique implique que la conception est constituée de diverses instanciations d'éléments communs. Chaque élément commun est par exemple défini une fois dans le fichier de conception géométrique, et les coordonnées de chaque instanciation sont par exemple indiquées. En outre, chaque instanciation peut correspondre à une translation, une rotation, un grossissement, une réflexion, etc. de l'élément commun, et cette information est aussi indiquée pour chaque instanciation.

Par exemple, en figure 7, la conception géométrique hiérarchique 700 comprend trois instanciations d'un élément commun 702, parmi lesquelles une instanciation 702-1 est identique à l'élément commun 702, une instanciation 702-2 correspond à une réflexion verticale de l'élément commun 702, et une instanciation 702-3 correspond à la fois à une rotation et une réflexion de l'élément commun 702. La conception géométrique hiérarchique 700 comprend aussi par exemple quatre instanciations d'un élément commun 704, dont chacune est par exemple une réflexion horizontale de cet élément.

La figure 8 est un graphique représentant des cellules dans une structure de conception hiérarchique. Toutes les cellules de la conception font par exemple partie d'une cellule supérieure (TOP CELL), qui comprend M cellules CELL 1 à CELL M. Chacune des cellules CELL 1 à CELL M comprend par exemple un ou plusieurs éléments correspondant à des instanciations d'une ou plusieurs cellules feuilles, dont un nombre L se trouve dans l'exemple de la figure 8, avec les références LEAF CELL 1 à LEAF CELL L.

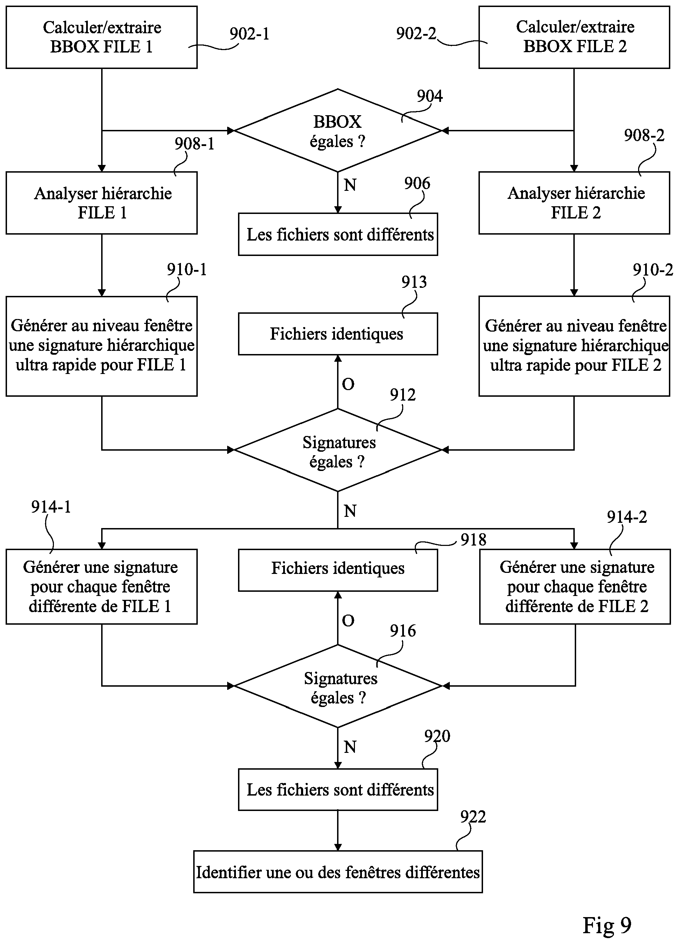

La figure 9 est un organigramme représentant des étapes dans un procédé de comparaison de fichiers de conception géométrique FILE 1, FILE 2 ayant des structures hiérarchiques selon un exemple de réalisation de la présente description. Ce procédé est par exemple mis en œuvre par le dispositif informatique 400 de la figure 4. Le même processus peut être utilisé pour comparer des bases de données géométriques ayant des structures hiérarchiques.

Dans des étapes parallèles 902-1 et 902-2, des BBOX des fichiers FILE 1, FILE 2 sont respectivement calculées ou extraites. Par exemple, la BBOX peut être mémorisée dans le fichier, ou peut être calculée sur la base de la conception représentée dans le fichier.

Dans une étape 904, les BBOX des fichiers FILE 1, FILE 2 sont comparées. Si elles ne sont pas égales, cela fournit par exemple une indication rapide que les fichiers sont différents, comme cela est représenté par une étape 906. Un utilisateur peut être informé de la différence par un message approprié affiché sur le dispositif d'affichage 412. Sinon, le traitement parallèle des fichiers continue.

Dans des étapes parallèles 908-1 et 908-2, le dispositif de traitement 402 identifie par exemple que les fichiers FILE 1, FILE 2 ont une structure hiérarchique, et analyse la hiérarchie dans le fichier pour identifier une hiérarchie d'éléments de conception communs ayant chacun une ou plusieurs instanciations.

Dans des étapes parallèles 910-1, 910-2, une signature hiérarchique au niveau fenêtre est par exemple générée pour chaque fichier FILE 1, FILE 2 respectivement. Cette signature peut par exemple être générée rapidement par rapport à une signature générée sans exploiter la structure de fichier hiérarchique, et ainsi les signatures sont désignées dans les étapes 910-1 et 910-2 comme des signatures hiérarchiques ultrarapides. La génération de chaque signature implique par exemple la génération d'une signature élémentaire pour chaque élément de conception commun, puis, pour chaque instanciation de l'élément de conception commun, la génération d'une signature sur la base de la signature élémentaire et d'une indication de la manière dont l'élément est instancié, comprenant par exemple la position, la rotation (s'il y en a une), la symétrie (s'il y en a une), le grossissement (s'il y en a un), etc. Par exemple, dans le cas de l'instanciation 702-1 de la figure 7, sa signature est par exemple égale à la signature élémentaire générée pour l'élément 702 accompagnée des coordonnées x et y indiquant où l'élément 702 est instancié. Dans le cas de l'instanciation 702-2, la signature élémentaire est utilisée, accompagnée d'une indication des coordonnées x et y de l'instanciation, et d'une indication de la réflexion qui a été appliquée.

Dans une étape 912, les signatures hiérarchiques au niveau fenêtre générées dans les étapes 910-1 et 910-2 sont comparées une par une. Si toutes les signatures sont trouvées égales, les fichiers sont par exemple présumés identiques dans une étape 913, et l'utilisateur peut être informé de ce résultat par l'intermédiaire du dispositif d'affichage 412. Dans l'autre cas, si une ou plusieurs des signatures sont trouvées différentes, le procédé passe aux étapes parallèles 914-1 et 914-2. En effet, une telle différence peut résulter d'une différence dans la manière avec laquelle les structures hiérarchiques des deux fichiers sont définies, plutôt que d'une différence substantielle entre les conceptions.

Dans les étapes parallèles 914-1 et 914-2, des signatures au niveau fenêtre pour les fichiers FILE 1 et FILE 2 sont par exemple générées sans prendre en compte la structure hiérarchique, et des signatures des fenêtres correspondantes dans chaque fichier sont comparées une par une dans une étape 916. Si toutes les signatures sont trouvées égales, les fichiers sont par exemple présumés identiques dans une étape 918, et l'utilisateur peut être informé de ce résultat par l'intermédiaire du dispositif d'affichage 412. Autrement, si une ou plusieurs des signatures sont trouvées différentes, les fichiers sont par exemple présumés différents dans une étape 920, et l'utilisateur est par exemple informé de ce résultat par l'intermédiaire du dispositif d'affichage 412. Dans certains cas, directement une paire de signatures et trouvée avec des signatures différentes, le traitement s'arrête et la fenêtre trouvée différente dans chaque fichier est par exemple indiquée à l'utilisateur dans une étape 922. En variante, toutes les signatures sont générées et comparées, et l'utilisateur est informé de toutes les fenêtres trouvées comme étant différentes dans chaque fichier dans l'étape 922.

L'exemple de la figure 9 implique la génération des signatures hiérarchiques au niveau fenêtre dans les étapes 910-1 et 910-2, et de signatures au niveau fenêtre dans les étapes 914-1 et 914-2. Toutefois, les signatures au niveau fenêtre hiérarchiques et non hiérarchiques pour l'un ou l'autre des fichiers ou les deux pourraient avoir déjà été calculées précédemment.

Un avantage des modes de réalisation décrits ici est que, en générant une signature numérique d'un fichier de conception géométrique sur la base d'une projection sur un seul axe de la conception géométrique, la signature peut fournir une indication efficace mais condensée de la substance de la conception. Ainsi, en comparant deux signatures, des différences substantielles entre les conceptions géométriques associées peuvent être identifiées de manière rapide. Avantageusement, la mémorisation de la signature numérique utilise relativement peu de mémoire, en particulier dans le cas où la signature a été encore condensée davantage par l'utilisation d'une fonction de hachage.

Avec la description ainsi faite d'au moins un mode de réalisation illustratif, diverses altérations, modifications et améliorations apparaîtront facilement à l'homme de l'art. Par exemple, bien qu'on ait décrit des modes de réalisation dans lesquels une signature numérique est basée sur une projection sur un seul axe de sommets de chaque élément d'une conception, dans des variantes de réalisation, d'autres points pourraient en plus ou à la place être projetés, comme des points se trouvant à michemin le long de chaque bord. En outre, il apparaîtra clairement à l'homme de l'art que les divers éléments de conception peuvent être reliés entre eux, et que bien qu'on ait donné un exemple d'une conception à une seule couche, le procédé pourrait être appliqué à des conceptions multicouches. Il sera clair pour l'homme de l'art que les divers éléments décrits en relation avec les divers modes de réalisation pourraient être combinés, dans des variantes de réalisation, selon diverses combinaisons.

## Revendications

1. Procédé de génération d'une signature numérique d'une conception géométrique représentée par un fichier de conception géométrique, le procédé comprenant la génération, par un dispositif de traitement de données (402), de la signature numérique sur la base d'une projection sur un seul axe de la conception géométrique, dans lequel la génération de la signature numérique comprend la réalisation, par le dispositif de traitement de données (402), de la projection sur un seul axe pour générer un vecteur comprenant des coordonnées d'un seul axe de points sélectionnés dans la conception géométrique.

2. Procédé selon la revendication 1, dans lequel la génération de la signature numérique comprend en outre l'application, par le dispositif de traitement de données (402), d'une fonction de hachage au vecteur afin de réduire sa longueur.

3. Procédé de détection, par un dispositif de traitement de données (402), de différences entre une première conception géométrique définie par un premier fichier de conception géométrique et une deuxième conception géométrique définie par un deuxième fichier de conception géométrique, le procédé comprenant :
générer, pour au moins le premier fichier de conception géométrique, une première signature numérique selon le procédé de la revendication 1 ou 2 ; et
comparer la première signature numérique à une deuxième signature numérique associée au deuxième fichier de conception géométrique.

4. Procédé selon la revendication 3, comprenant en outre, avant la comparaison :
générer, pour le deuxième fichier de conception géométrique, la deuxième signature numérique sur la base d'une projection sur un seul axe de la deuxième conception géométrique.

5. Procédé selon la revendication 3, comprenant en outre, avant la comparaison :
extraire, par le dispositif de traitement de données, la deuxième signature numérique à partir du deuxième fichier de conception géométrique.

6. Procédé selon l'une quelconque des revendications 3 à 5, dans lequel la génération de la première signature numérique comprend :
diviser, par le dispositif de traitement de données, la première conception géométrique en une pluralité de fenêtres ;
générer une première sous-signature pour chacune des fenêtres, chaque première sous-signature étant générée sur la base d'une projection sur un seul axe de la portion de la conception géométrique contenue dans la fenêtre correspondante ; et
combiner les premières sous-signatures des fenêtres pour générer la première signature numérique.

7. Procédé selon l'une quelconque des revendications 3 à 6, comprenant en outre :
générer, ou extraire à partir du premier fichier de conception géométrique, une première boîte de délimitation associée à la première conception géométrique ;
comparer la première boîte de délimitation à une deuxième boîte de délimitation associée à la deuxième conception géométrique ; et
détecter une différence entre les premier et deuxième fichiers de conception géométrique en détectant une différence entre les première et deuxième boîtes de délimitation.

8. Procédé selon l'une quelconque des revendications 3 à 7, dans lequel la génération de la première signature numérique comprend :
identifier, par le dispositif de traitement de données, une hiérarchie d'éléments de conception communs (702) ayant chacun une ou plusieurs instanciations (702-1, 702-2, 702-3) dans le premier fichier de conception géométrique ;
générer une structure élémentaire pour chaque élément de conception commun identifié dans le premier fichier de conception géométrique ; et
générer la première signature numérique sur la base de chacune des signatures élémentaires et d'une ou plusieurs caractéristiques de l'instanciation de chacun des éléments de conception communs dans le premier fichier de conception géométrique.

9. Support de stockage électronique non transitoire mémorisant un programme informatique comprenant des instructions pour exécuter le procédé de l'une quelconque des revendications 1 à 8, lorsqu'elles sont exécutées par le dispositif de traitement de données.

10. Dispositif informatique comprenant :
une mémoire (406, 408) mémorisant un premier fichier de conception géométrique définissant une première conception géométrique ; et
un dispositif de traitement de données (402) agencé pour :
générer une première signature numérique pour le premier fichier de conception en réalisant une projection sur un seul axe de la première conception géométrique, dans lequel la génération de la signature numérique comprend la réalisation, par le dispositif de traitement de données (402), de la projection sur un seul axe pour générer un vecteur comprenant des coordonnées d'un seul axe de points sélectionnés dans la conception géométrique ; et
mémoriser la première signature numérique dans une mémoire.

11. Dispositif informatique selon la revendication 10, dans lequel le dispositif de traitement de données (402) est en outre agencé pour détecter des différences entre la première conception géométrique et une deuxième conception géométrique définie par un deuxième fichier de conception géométrique en comparant la première signature numérique à une deuxième signature numérique associée au deuxième fichier de conception géométrique, et pour afficher sur un dispositif d'affichage (412) une indication de la différence détectée.

## Patentansprüche

1. Ein Verfahren zum Erzeugen einer digitalen Signatur eines geometrischen Entwurfs, der durch eine geometrische Entwurfsdatei dargestellt wird, wobei das Verfahren das Erzeugen, durch ein Datenverarbeitungsgerät (402), der digitalen Signatur aufweist, und zwar basierend auf einer Einzelachsenprojektion des geometrischen Entwurfs, wobei das Erzeugen der digitalen Signatur Durchführen, durch das Datenverarbeitungsgerät (402), der Einzelachsenprojektion aufweist, um einen Vektor zu erzeugen, der Einzelachsenkoordinaten von ausgewählten Punkten in dem geometrischen Entwurf aufweist.

2. Das Verfahren nach Anspruch 1, wobei das Erzeugen der digitalen Signatur ferner Anwenden, durch das Datenverarbeitungsgerät (402), einer HASH-Funktion auf den genannten Vektor aufweist, um dessen Länge zu reduzieren.

3. Ein Verfahren zum Detektieren, durch ein Datenverarbeitungsgerät (402), von Unterschieden zwischen einem ersten geometrischen Entwurf, der durch eine erste geometrische Entwurfsdatei definiert ist, und einem zweiten geometrischen Entwurf, der durch eine zweite geometrische Entwurfsdatei definiert ist, wobei das Verfahren Folgendes aufweist:
Erzeugen, für wenigstens die erste geometrische Entwurfsdatei, einer ersten digitalen Signatur gemäß dem Verfahren nach Anspruch 1 oder 2; und
Vergleichen der ersten digitalen Signatur mit einer zweiten digitalen Signatur, die mit der zweiten geometrischen Entwurfsdatei verknüpft ist.

4. Das Verfahren nach Anspruch 3, das vor dem Vergleichen ferner Folgendes aufweist:
Erzeugen, für die zweite geometrische Entwurfsdatei, der zweiten digitalen Signatur basierend auf einer Einzelachsenprojektion des zweiten geometrischen Entwurfs.

5. Das Verfahren nach Anspruch 3, das, vor dem Vergleichen, ferner Folgendes aufweist:
Extrahieren der zweiten digitalen Signatur aus der zweiten geometrischen Entwurfsdatei durch das Datenverarbeitungsgerät.

6. Das Verfahren nach einem der Ansprüche 3 bis 5, wobei das Erzeugen der ersten digitalen Signatur Folgendes aufweist:
Unterteilen, durch das Datenverarbeitungsgerät, des ersten geometrischen Entwurfs in eine Vielzahl von Fenstern;
Erzeugen einer ersten Untersignatur für jedes der Fenster, wobei jede erste Untersignatur basierend auf einer Einzelachsenprojektion des in dem entsprechenden Fenster enthaltenen Teils des geometrischen Entwurfs erzeugt wird; und
Kombinieren der ersten Untersignaturen der genannten Fenster, um die genannte erste digitale Signatur zu erzeugen.

7. Das Verfahren nach einem der Ansprüche 3 bis 6 , das ferner Folgendes aufweist:
Erzeugen oder Extrahieren aus der ersten geometrischen Entwurfsdatei einer ersten Begrenzungsbox, die mit dem ersten geometrischen Entwurf verknüpft ist;
Vergleichen der ersten Begrenzungsbox mit einer zweiten Begrenzungsbox, die mit dem zweiten geometrischen Entwurf verknüpft ist; und
Detektieren eines Unterschieds zwischen der ersten und der zweiten geometrischen Entwurfsdatei durch Detektieren eines Unterschieds zwischen der ersten und der zweiten Begrenzungsbox.

8. Das Verfahren nach einem der Ansprüche 3 bis 7, wobei das Erzeugen der ersten digitalen Signatur Folgendes aufweist:
Identifizieren, durch das Datenverarbeitungsgerät, einer Hierarchie von gemeinsamen Entwurfselementen (702), von denen jedes eine oder mehrere Instanziierungen (702-1, 702-2, 702-3) innerhalb der ersten geometrischen Entwurfsdatei aufweist;
Erzeugen einer Element-Signatur für jedes gemeinsame Entwurfselement, das in der ersten geometrischen Entwurfsdatei identifiziert ist; und
Erzeugen der ersten digitalen Signatur basierend auf jeder der Element-Signaturen und auf einem oder mehreren Merkmalen der Instanziierung jedes der gemeinsamen Entwurfselemente in der ersten geometrischen Entwurfsdatei.

9. Ein nicht-flüchtiges elektronisches Speichermedium, das ein Computerprogramm speichert, das Anweisungen aufweist zur Ausführung des Verfahrens nach einem der Ansprüche 1 bis 8, wenn sie durch das Datenverarbeitungsgerät ausgeführt werden.

10. Ein Computergerät, das Folgendes aufweist:
einen Speicher (406, 408), der eine erste geometrische Entwurfsdatei speichert, die einen ersten geometrischen Entwurf definiert; und
ein Daten-Verarbeitungsgerät (402), das konfiguriert ist, zum:
Erzeugen einer ersten digitalen Signatur für die erste Entwurfsdatei durch Ausführen einer Einzelachsenprojektion des ersten geometrischen Entwurfs, wobei das Erzeugen der digitalen Signatur das Ausführen, durch das Datenverarbeitungsgerät (402), der Einzelachsenprojektion aufweist, um einen Vektor zu erzeugen, der Einzelachsenkoordinaten von ausgewählten Punkten in dem geometrischen Entwurf aufweist; und
Speichern der ersten digitalen Signatur in einem Speicher.

11. Das Computergerät nach Anspruch 10, wobei das Datenverarbeitungsgerät (402) ferner konfiguriert ist, Unterschiede zwischen dem ersten geometrischen Entwurf und einem zweiten geometrischen Entwurf, der durch eine zweite geometrische Entwurfsdatei definiert ist, zu detektieren, indem es die erste digitale Signatur mit einer zweiten digitalen Signatur vergleicht, die mit der zweiten geometrischen Entwurfsdatei verknüpft ist, und auf einem Anzeigegerät (412) einen Hinweis auf den erkannten Unterschied anzuzeigen.

## Claims

1. A method of generating a digital signature of a geometric design represented by a geometric design file, the method comprising generating, by a data processing device (402), the digital signature based on a single axis projection of the geometric design, wherein generating the digital signature comprises performing, by the data processing device (402), the single axis projection to generate a vector comprising single axis coordinates of selected points in the geometric design.

2. The method of claim 1, wherein generating the digital signature further comprises applying, by the data processing device (402), a HASH function to said vector in order to reduce its length.

3. A method of detecting, by a data processing device (402), differences between a first geometric design defined by a first geometric design file and a second geometric design defined by a second geometric design file, the method comprising:
generating, for at least the first geometric design file, a first digital signature according to the method of claim 1 or 2; and
comparing the first digital signature with a second digital signature associated with the second geometric design file.

4. The method of claim 3, further comprising, prior to said comparing:
generating, for the second geometric design file, the second digital signature based on a single axis project of the second geometric design.

5. The method of claim 3, further comprising, prior to said comparing:
extracting, by the data processing device, the second digital signature from the second geometric design file.

6. The method of any of claims 3 to 5, wherein generating the first digital signature comprises:
dividing, by the data processing device, the first geometric design into a plurality of windows;
generating a first sub-signature for each of said windows, wherein each first sub-signature is generated based on a single axis projection of the portion of the geometric design contained within the corresponding window; and
combining the first sub-signatures of said windows to generate said first digital signature.

7. The method of any of claims 3 to 6, further comprising:
generating, or extracting from the first geometric design file, a first boundary box associated with the first geometric design;
comparing said first boundary box with a second boundary box associated with the second geometric design; and
detecting a difference between the first and second geometric design files by detecting a difference between the first and second boundary boxes.

8. The method of any of claims 3 to 7, wherein generating the first digital signature comprises:
identifying, by the data processing device, a hierarchy of common design elements (702) each having one or more instantiations (702-1, 702-2, 702-3) within said first geometric design file;
generating an elemental signature for each common design element identified in said first geometric design file; and
generating said first digital signature based on each of said elemental signatures and on one or more characteristics of the instantiation of each of the common design elements in the first geometric design file.

9. A non-transitory electronic storage medium storing a computer program comprising instructions for executing the method of any of claims 1 to 8 when executed by said data processing device.

10. A computing device comprising:
a memory (406, 408) storing a first geometric design file defining a first geometric design; and
a data processing device (402) configured to:
generate a first digital signature for the first design file by performing a single axis projection of the first geometric design, wherein generating the digital signature comprises performing, by the data processing device (402), the single axis projection to generate a vector comprising single axis coordinates of selected points in the geometric design; and
store the first digital signature to a memory.

11. The computing device of claim 10, wherein the data processing device (402) is further configured to detect differences between the first geometric design and a second geometric design defined by a second geometric design file by comparing the first digital signature with a second digital signature associated with the second geometric design file, and to display on a display device (412) an indication of the detected difference.
